# EUROPÄISCHE PATENTSCHRIFT

(11) **EP 2 148 998 B1**
(45) Veröffentlichungstag und Bekanntmachung des Hinweises auf die Patenterteilung: **15.11.2017**
(21) Anmeldenummer: 08784397.5
(22) Anmeldetag: 07.05.2008
(51) Int. Cl.: F16H 59/10, F16H 61/22

(54) **BETÄTIGUNGSEINRICHTUNG MIT SPERRVORRICHTUNG**
ACTUATING DEVICE COMPRISING A LOCKING MECHANISM
DISPOSITIF DE COMMANDE DOTÉ D'UN DISPOSITIF DE BLOCAGE

(30) Priorität: 22.05.2007 DE 102007024030
(43) Veröffentlichungstag der Anmeldung: 03.02.2010
(73) Patentinhaber: ZF Friedrichshafen AG, 88046 Friedrichshafen (DE)
(72) Erfinder: GIEFER, Andreas, 49448 Lemförde (DE); RAKE, Ludger, 49356 Diepholz (DE); ROSENTRETER, Sascha, 32339 Espelkamp (DE); HEITMANN, Daniel, 49413 Dinklage (DE)
(86) Internationale Anmeldenummer: PCT/DE2008/050013
(87) Internationale Veröffentlichungsnummer: WO 2008/141641

(56) Entgegenhaltungen:
- EP-A- 0 974 776
- DE-A1- 10 059 383
- DE-A1-102005 023 926

## Beschreibung

Die Erfindung betrifft eine Betätigungseinrichtung für ein Gangwechselgetriebe, beispielsweise für ein Automatgetriebe mit shift-by-wire-Betätigung, gemäß dem Oberbegriff des Patentanspruches 1.

Gangwechselgetriebe von Kraftfahrzeugen werden üblicherweise mittels einer im Griffbereich des Fahrers angeordneten Betätigungseinrichtung gesteuert bzw. geschaltet. Regelmäßig kommen hierzu Betätigungselemente wie Schalthebel oder Wählhebel zum Einsatz, die beispielsweise zwischen den Frontsitzen des Kraftfahrzeugs angeordnet sind.

Die konstruktiven und ergonomischen Anforderungen an solche Betätigungseinrichtungen bzw. Wählhebel für Gangwechselgetriebe sind dabei vielfältig. Um beispielsweise dem Fahrer aus Gründen der Sicherheit und Ergonomie ein realistisches Gefühl der Getriebebetätigung zu vermitteln, wird für gattungsgemäße Betätigungseinrichtungen gefordert, dass dem Fahrer sowohl optische wie auch klare haptische bzw. taktile Rückmeldungen über den aktuellen Schalt- bzw. Betriebszustand des Getriebes vermittelt werden.

In Abhängigkeit des Zustands des zu bedienenden Gangwechselgetriebes sowie in Abhängigkeit anderer Zustandsfaktoren am Kraftfahrzeug - Zündung eingeschaltet, Motor läuft, Fahrzeuggeschwindigkeit etc. - ist es beispielsweise im Allgemeinen notwendig, den Betätigungsbereich des Wählhebels fallweise einzuschränken, damit die Auswahl etwa momentan nicht zulässiger Schaltzustände bzw. Fahrstufen des Gangwechselgetriebes durch den Fahrer unterbunden wird.

Insbesondere bei shift-by-wire-gesteuerten Gangwechselgetrieben, worunter auch die meisten aktuellen Automatgetriebe fallen, wird aus Gründen der Ergonomie und Sicherheit dabei gefordert, das die momentan nicht zulässigen Schaltzustände dem Fahrer in Form entsprechender Sperrungen der zugehörigen Bedienpositionen des Wählhebels sowohl optisch als auch haptisch signalisiert werden.

Im Fall der früher gebräuchlichen, rein mechanischen Getriebebetätigung bzw. der mechanischen Kopplung zwischen Wählhebel und Gangwechselgetriebe - beispielsweise mittels Seilzug oder Gestänge - stimmte die Wählhebelstellung aufgrund der mechanischen Kopplung zwischen Wählhebel und Getriebe hingegen ohnehin stets mit der tatsächlichen Getriebestellung überein, und etwaige Betätigungssperren im Getriebe wurden durch die mechanische Übertragung ohne weiteres unmittelbar auch am Wählhebel spürbar.

Im Fall der zunehmend eingesetzten elektrischen Betätigung bzw. im Fall der shift-by-wire-Betätigung von Gangwechselgetrieben existiert jedoch keine mechanische Kopplung mehr zwischen dem Betätigungselement bzw. Wählhebel in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim "shift-by-wire"-Getriebe zumeist ausschließlich mittels elektrischer oder elektronischer Signale und anschließender zumeist elektrohydraulischer Umsetzung der Schaltbefehle am Getriebe selbst. Dies gilt teilweise sowohl für moderne Gangwechselgetriebe, insbesondere jedoch für die aktuellen Generationen der Automatgetriebe, welche zumeist komplett aktuatorisch fernbetätigt werden.

Im Fall der shift-by-wire-betätigten Gangwechselgetriebe führt die fehlende mechanische Verbindung zwischen der Getriebeaktuatorik und dem Wählhebel jedoch dazu, dass - aufgrund des aktuellen Fahrzeug- bzw. Getriebezustands - etwa im Getriebe eingelegte Schaltsperren nicht mehr über ein Schaltgestänge auf den Zustand des Wählhebels rückwirken können. Der Fahrer kann somit nicht ohne weiteres anhand bestimmter am Wählhebel spürbar blockierter Schaltstellungen erkennen, dass die entsprechenden Fahrstufen bzw. Getriebezustände im momentanen Fahrzustand etwa nicht zulässig sind bzw. nicht angewählt werden können.

Es ist versucht worden, dieser Problematik damit zu begegnen, dass Wählhebel von shift-by-wire-gesteuerten Gangwechselgetrieben mit diversen Aktuatoren zur selektiven Sperrung unzulässiger Schaltbefehle versehen worden sind. Diese Aktuatoren werden in Abhängigkeit des Fahrzeug- bzw. Getriebezustands aktiviert, um so den ursprünglichen Gesamtbewegungsbereich des Wählhebels entsprechend des momentanen Fahr- oder Getriebezustands einzuschränken. In der europäische Patentschrift EP0974776 zum Beispiel wird ein Sperrelement zur Verriegelung eines Wählhebels offenbart, das durch verschiedenen Sperrklinken und elektromagnetische Aktuatoren realisiert ist.
Dies ist jedoch nachteilig insofern, als der für eine solche Mehrzahl an Aktuatoren vorzusehende Bauraum im Bereich des Wählhebels nicht ohne weiteres zur Verfügung steht. Ferner besitzen derartige, zumeist elektromagnetische Aktuatoren aufgrund der darin vorhandenen Kupferwicklungen in eine nicht unerhebliche Masse, was zu einer unerwünschten Gewichtserhöhung der Schalteinheit beiträgt. Nicht zuletzt verursacht eine Mehrzahl an separaten Aktuatoren auch eine Erhöhung des konstruktiven Aufwands und damit der Kosten für die Schalteinheit. Auch der Energieverbrauch solcher Aktuatoren und die damit verbundene Wärmeentwicklung spielt angesichts des zunehmenden Strebens nach Verbrauchsreduzierung eine nicht zu vernachlässigende Rolle.

Mit diesem Hintergrund ist es Aufgabe der vorliegenden Erfindung, eine Betätigungseinrichtung zu schaffen, insbesondere zur elektrischen bzw. elektronischen shift-by-wire-Betätigung eines Gangwechselgetriebes, die eine Sperrvorrichtung aufweist, und mit der sich die genannten Nachteile des Standes der Technik überwinden lassen. Insbesondere soll die Sperreinrichtung dabei auch im Fall komplexer Sperrmimiken mit einer möglichst geringen Anzahl an Aktuatoren auskommen, womit insbesondere Gewicht, Bauraum, Energieverbrauch und Kosten - bei gleichzeitig zuverlässiger Funktionalität - reduziert werden sollen.

Diese Aufgabe wird durch eine Betätigungseinrichtung mit den Merkmalen des Patentanspruchs 1 gelöst.

Bevorzugte Ausführungsformen sind Gegenstand der Unteransprüche.

In für sich genommen zunächst bekannter Weise umfasst die Betätigungseinrichtung gemäß der vorliegenden Erfindung einen - innerhalb mindestens einer Schaltgasse bewegbaren - Wählhebel sowie eine Sperrvorrichtung. Dabei dient die Sperrvorrichtung zur Einschränkung des Bewegungsbereichs des Wählhebels, zur Blockierung bestimmter Fahrstufenpositionen des Wählhebels oder auch zur Blockierung des Wählhebels in bestimmten Wählhebelstellungen. Weiterhin
zeichnet sich die Betätigungseinrichtung dadurch aus, dass die Sperrvorrichtung eine mit dem Wählhebel verbundene Sperraussparung sowie einen aktuatorisch um eine Drehachse rotierbaren, im Wesentlichen prismatischen Sperrnocken umfasst, wobei die Nocken-Drehachse parallel zur Längsachse des Nockens verläuft und wobei der Nocken in die mit dem Wählhebel verbundene Sperraussparung eingreift.

Erfindungsgemäß zeichnet sich die Betätigungsrichtung dadurch aus, dass der Nocken auf einem Nockenrad stirnseitig angeordnet ist.

Dabei ist das Nockenrad vorzugsweise durch ein Zahnrad gebildet.

Auf diese Weise ergibt sich eine konstruktiv einfache sowie robuste und betriebssichere Darstellung einer variablen Sperrvorrichtung zur Einschränkung des Bewegungsbereichs des Wählhebels und/oder zur Blockierung des Wählhebels in bestimmten Wählhebelstellungen, die mit lediglich einer Aktuatoreinrichtung auskommt. Insbesondere kann die Aktuatoreinrichtung dabei als Getriebeservo ausgebildet sein, was den zusätzlichen Vorteil mit sich bringt, dass unabhängig von der Position des Sperrnockens sowie unabhängig vom Status der etwa aktivierten oder deaktivierten Wählhebelsperre keinerlei Betriebsenergie zur Aufrechterhaltung der Sperrenposition erforderlich ist.

Neben der Möglichkeit, den Wählhebel in bestimmten Stellungen zu blockieren oder den Bewegungsbereich des Wählhebels einzuschränken, bietet die erfindungsgemäße Betätigungseinrichtung zudem die Möglichkeit, den gesamten Bewegungsbereich des Wählhebels in Abhängigkeit der Drehwinkelstellung des Sperrnockens bei unveränderter Größe variabel zu positionieren.

Zudem ergibt sich gegenüber den bekannten Sperreinrichtungen für Wählhebel der Vorteil, dass bei einer etwaigen Betätigung des Wählhebels gleichzeitig mit der Aktivierung der Sperreinrichtung die Gefahr des unbeabsichtigten Überfahrens der gerade eingelegten Wählhebelsperre und damit des Verbleibens des Wählhebels in einer eigentlich gesperrten Wählhebelstellung vermieden werden kann. Denn beim versehentlichen Überfahren einer Wählhebelsperre im Moment des Einlegens der Sperre wird der Wählhebel durch die in Form des rotierbaren Nockens gebildete, einfahrende Sperre einfach in die korrekte Position zurückgefahren. Dies bedeutet mit anderen Worten, dass die erfindungsgemäß ausgebildete Sperreinrichtung zudem sogar als Aktuatorik zur automatischen Bewegung des Wählhebels in bestimmten Situationen herangezogen werden kann.

Insbesondere mit dem Hintergrund der variablen Positionierbarkeit des gesamten Bewegungsbereichs des Wählhebels ist gemäß einer besonders bevorzugten Ausführungsform der Erfindung vorgesehen, dass der Wählhebel monostabil ausgebildet ist.

Dies bedeutet mit anderen Worten, dass der dergestalt monostabil ausgebildete Wählhebel nach jeder Schaltbetätigung stets wieder in dieselbe Mittelstellung zurückkehrt. Dies kann vor allem bei der Betätigung von shift-by-wire-gesteuerten Getrieben von Vorteil sein, da auf diese Weise insbesondere auf eine motorische Nachführung des Wählhebels bei etwa automatisch eingelegten Getriebefahrstufen wie beispielsweise im Fall der per "Auto-P" selbsttätig eingelegten Parksperre verzichtet werden kann. Stattdessen muss bei derartigen monostabil ausgebildeten Wählhebeln lediglich die Anzeige der Getriebefahrstufe nachgeführt bzw. jeweils aktualisiert und an den aktuellen Getriebezustand angepasst werden.

Für den Fahrer bedeutet dies jedoch, dass die Rückmeldung über den tatsächlichen Schaltzustand des Getriebes bei einem monostabil ausgeführten Wählhebel zunächst einmal ausschließlich einer separaten Anzeige beispielsweise mittels Leuchtdioden oder Anzeigesymbolen überlassen bleibt. Hingegen entfällt bei einem monostabilen Wählhebel die Möglichkeit, dem Fahrer anhand der Wählhebelstellung optische bzw. haptische Rückmeldung über den Schaltzustand des Getriebes zu vermitteln.

Bei aus dem Stand der Technik bekannten monostabilen Wählhebeln aufwändig ist ferner die Realisierung der korrekten mechanischen Schaltlogik, die mechanische Darstellung des jeweils zulässigen Bewegungswinkelbereichs des Wählhebels, sowie gegebenenfalls die Realisierung notwendiger Schalthebelsperren wie beispielsweise Keylock- oder Shiftlock, da hierzu bislang eine aufwändige Aktuatorik zur selektiven Sperrung des Wählhebels erforderlich war.

Der erfindungsgemäße Einsatz einer Sperrvorrichtung mit rotierbarem Sperrnocken bringt jedoch auch hier entscheidende Vorteile mit sich. Denn durch das Zusammenwirken des Sperrnockens mit der am Wählhebel angeordneten Sperrausnehmung lässt sich nicht nur eine variable Beschränkung des Bewegungsbereichs des Wählhebels sowie gegebenenfalls eine Blockierung des Wählhebels erzielen, sondern es lässt sich auch der zulässige Bewegungsbereich des Wählhebels variabel innerhalb des gesamten Bewegungsfensters des Wählhebels positionieren.

Letzteres ist bei einem monostabilen Wählhebel von Bedeutung insofern, als die vom Wählhebel nach der Betätigung stets selbsttätig wieder eingenommene Mittelstellung jedem beliebigen tatsächlichen Schaltzustand des Getriebes zugeordnet sein kann.

Insbesondere kann der in seiner stabilen Mittelstellung verharrende Wählhebel dabei für jede der standardmäßigen Getriebefahrstufen "P", "R", "N" oder "D" stehen.
In welcher der Fahrstufen sich das Getriebe tatsächlich befindet, wird primär lediglich durch eine entsprechende variable Anzeigevorrichtung am Wählhebel oder auf den Fahrzeugarmaturen angezeigt.

Dank des erfindungsgemäßen Einsatzes einer Sperreinrichtung mit Sperrnocken kann jedoch auch bei einem monostabilen Wählhebel das Verhalten eines normalen, multistabilen Wählhebels mit mehreren stabilen Wählhebelpositionen insoweit nachgebildet werden, als die tatsächliche Bewegbarkeit des Wählhebels von der im Getriebe jeweils tatsächlich eingelegten Fahrstufe abhängt, und zwar ohne dass hierzu selektive Sperren am Wählhebel erforderlich wären. Ist im Getriebe beispielsweise die Parksperre eingelegt, so lässt sich ein konventioneller Wählhebel um keine weitere Stufe nach vorne, jedoch im allgemeinen um drei Stufen nach hinten bewegen, bevor er an dem der Parksperrenstellung gegenüberliegenden Anschlag der Betätigungseinrichtung bzw. am gegenüberliegenden Ende der Wählhebelkulisse anschlägt.

Dank der Erfindung lässt sich dieses der intuitiven Bedienbarkeit entgegenkommende Verhalten auch bei einem monostabilen Wählhebel realisieren, indem durch entsprechende Ansteuerung des Sperrnockens der aktuell zulässige Bewegungsbereich des Wählhebels jeweils so innerhalb des gesamten Bewegungsfensters des Wählhebels verschoben wird, dass entsprechende Bewegungen des Wählhebels nur in derjenigen Richtung und nur um denjenigen Winkel möglich sind, die logisch mit der eingelegten Getriebefahrstufe korrespondieren.

Die Erfindung wird dabei zunächst einmal unabhängig davon verwirklicht, wie der Nocken ausgeformt, konstruktiv ausgebildet und wie die aktuatorischen Betätigung des Nockens angeordnet ist. Gemäß besonders bevorzugter Ausführungsformen der Erfindung jedoch ist der Nocken auf einem Nockenrad stirnseitig angeordnet, wobei das Nockenrad vorzugsweise durch ein Zahnrad gebildet ist.

Auf diese Weise lässt ergibt sich eine konstruktiv einfache Realisierung der Lagerung des Nockens; zudem kann so die Exzentrizität des Nockens gegenüber seiner Drehachse auf einfache Weise variiert werden, beispielsweise zur konstruktiven Anpassung der Sperrvorrichtung an unterschiedliche Wählhebelkinematiken. Die Ausbildung des Nockenrads als eines der Zahnräder der Aktuatorik für die Sperrvorrichtung bringt eine vorteilhafte Funktionsvereinigung von Teilen des Aktuatorgetriebes der Sperrvorrichtung mit dem Nockenrad und damit eine besonders einfache, kostengünstige und robuste Darstellbarkeit der Sperrvorrichtung mit sich.

Gemäß einer weiteren bevorzugten Ausführungsform der Erfindung ist die Sperraussparung an bzw. in einem mit dem Wählhebel winklig verbundenen Ausleger angeordnet. Dank dieser Ausführungsform ergibt sich insbesondere eine platzsparende, flache Anordnung der Sperrvorrichtung beispielsweise im Bereich des Sockels einer Wählhebeleinrichtung.

Nach einer bevorzugten Ausführungsform der Erfindung weist der Nocken eine im Wesentlichen runde Querschnittsform auf. Diese Ausführung ist kostengünstig realisierbar und erlaubt bei entsprechend exzentrischer Anordnung des Nockens auf dem Nockenrad dennoch mehrere unterschiedlich große Sperrbereiche bzw. mehrere Sperrpositionen für den Wählhebel, sowie bedarfsweise auch eine variable Positionierung des Bewegungsbereichs des Wählhebels innerhalb des zur Verfügung stehenden Gesamtbewegungsfensters.

Nach einer weiteren bevorzugten, alternativen Ausführungsform der Erfindung weist der Nocken eine im Wesentlichen polygonale Querschnittsform auf. Mittels dieser Ausführungsform können mit ein und derselben Sperrvorrichtung mehrere unterschiedliche Sperrpositionen bzw. verschiedene Bewegungsbereiche von ggf. unterschiedlicher Breite für den Wählhebel dargestellt werden. Je nach Exzentrizität bzw. Rotationswinkelstellung des Nockens kann ein unterschiedlicher aktuell wirksamer Durchmesser des Nockens innerhalb der mit dem Wählhebel verbundenen Sperraussparung zur Wirkung gelangen. Hieraus ergeben sich jeweils unterschiedliche Restbewegungswege der Sperraussparung und damit auch des Wählhebels gegenüber dem Nocken, die in einer definierten Einschränkung des Bewegungsbereichs bis hin zur kompletten Sperrung des Wählhebels in einer bestimmten Wählhebelstellung resultieren können.

Gemäß einer weiteren Ausführungsform der Erfindung weist der Nocken eine im Wesentlichen unregelmäßig oktogonale Querschnittsform auf. Dank eines dergestalt ausgebildeten Nockens können bis zu vier unterschiedlich große wirksame Nockendurchmesser und damit bis zu vier unterschiedlich breite Bewegungsbereiche für den Wählhebel realisiert werden. Ferner können die unterschiedlichen Nockendurchmesser aufgrund der unregelmäßigen Querschnittsform des Nockens zudem weitgehend unabhängig voneinander relativ zur Drehachse des Nockens positioniert werden, wodurch sich Bewegungsbereiche des Wählhebels in bis zu acht verschiedenen Positionen innerhalb des gesamten Bewegungsfensters des Wählhebels positionieren lassen.

Die Erfindung ist jedoch keineswegs beschränkt auf polygonale Nocken mit einer bestimmten Anzahl an Kanten oder mit einer bestimmten Anzahl an unterschiedlich positionierbaren Nockendurchmesser. Vielmehr sind prinzipiell auch Sperrnocken mit prinzipiell beliebig vielen Kanten und/oder beliebig vielen wirksamen Nockendurchmessern denkbar und machbar. Ebenso von der Erfindung umfasst sind zudem Sperrnocken auch ohne Kanten, die im Wesentlichen kontinuierlich veränderliche wirksame Nockenradien aufweisen und/oder zugehörige Sperraussparungen, deren Oberflächen im Querschnitt im Wesentlichen eine Freiformkurve bilden. Auf diese Weise lassen sich auch konstruktiv sehr komplexe Anforderungen an Positionierung bzw. Größenveränderung des Bewegungsbereichs eines Wählhebels erfüllen, wobei insbesondere auch eine stufenlose Positionierbarkeit bzw. Größenveränderbarkeit des Bewegungsbereichs realisiert werden kann.

Mit diesem Hintergrund ist gemäß einer besonders bevorzugten weiteren Ausführungsform der Erfindung vorgesehen, dass zumindest einer der wirksamen Durchmesser des Nockens mit der zugehörigen, gegenüber dem Nocken in dessen entsprechender Rotationswinkelstellung wirksamen Weite der Sperraussparung übereinstimmt. Auf diese Weise ergibt sich eine einfache Realisierung einer vollständigen Sperrposition des Wählhebels insbesondere ohne zusätzliche Sperrbauteile. Zur Sperrung des Wählhebels wird lediglich der Nocken in diejenige Winkelposition verbracht, in welcher sein wirksamer Durchmesser mit der wirksamen Weite der Sperraussparung übereinstimmt und zur Deckung kommt.

Eine weitere Ausführungsform der Erfindung sieht vor, dass die Sperreinrichtung mehrere als Nockenscheiben ausgebildete, achsparallel angeordnete und in Axialrichtung aneinander angrenzende Nocken aufweist. Dank der so nebeneinander angeordneten mehreren Nockenscheiben lassen sich weitere, zusätzliche Schalt- bzw. Sperrfunktionen für den Wählhebel realisieren, wie beispielsweise unterschiedliche Schaltbereiche oder Sperrbereiche, die in unterschiedlichen Schaltgassen des Wählhebels zur Wirkung kommen.

Mit diesem Hintergrund ist es gemäß einer weiteren bevorzugten Ausführungsform der Erfindung vorgesehen, dass eine zweite Nockenscheibe einen Sperrvorsprung aufweist. Dabei ist der Sperrvorsprung formkomplementär zu einer in der Sperraussparung angeordneten Ausnehmung ausgebildet, wobei die Ausnehmung in der Sperraussparung außerhalb der Anschlagbereiche für die erste Nockenscheibe angeordnet ist.

Auf diese Weise lässt sich über ein und dieselbe Sperrvorrichtung zusätzlich auch eine Sperrung bzw. Freigabe der seitlichen Bewegbarkeit des Wählhebels realisieren, insbesondere zum Wechsel des Wählhebels zwischen verschiedenen Wählhebelgassen, beispielsweise zwischen Schaltgasse und Tipgasse. Um beispielsweise den Wechsel aus der Schaltgasse in die Tipgasse für den Wählhebel freizugeben, wird der Nocken, bzw. das Nockenrad mit den Nockenscheiben, lediglich in diejenige Position gedreht, in welcher der Sperrvorsprung der zweiten Nockenscheibe zur Deckung mit der Ausnehmung in der Sperraussparung kommt. Nun kann der Wählhebel zusammen mit der Sperraussparung seitwärts aus der Schaltgasse in die Tipgasse bewegt werden, wobei der Sperrvorsprung der zweiten Nockenscheibe seitwärts durch die Ausnehmung in der Sperraussparung passieren kann. In allen anderen Rotationswinkelstellungen der Nockenscheibe hingegen ist die Seitwärtsbewegung des Wählhebels aus der Schaltgasse in die Tipgasse mittels des Sperrvorsprungs der zweiten Nockenscheibe gesperrt.

Im Folgenden wird die Erfindung anhand lediglich Ausführungsbeispiele darstellender Zeichnungen näher erläutert. Es zeigt:
- **Fig. 1**: in schematischer Seitenansicht eine Ausführungsform einer Betätigungseinrichtung gemäß der vorliegenden Erfindung mit zylindrischem Nocken und mit dem Wählhebel in Parksperrenstellung;
- **Fig. 2**: in einer **Fig. 1** entsprechenden Darstellung und Ansicht die Betätigungseinrichtung gemäß **Fig. 1****,** Wählhebel sowie Sperrausnehmung von "P" nach "N" bewegt;
- **Fig. 3**: in einer **Fig. 1** und **2** entsprechenden Darstellung die Betätigungseinrichtung gemäß **Fig. 1** und **2****,** mit dem Wählhebel in Fahrstufenstellung "D";
- **Fig. 4**: in einer **Fig. 1** bis **3** entsprechenden Darstellung die Betätigungseinrichtung gemäß **Fig. 1** bis **3****,** Wählhebel mit Sperrausnehmung von "D" nach "R" bewegt;
- **Fig. 5**: in einer **Fig. 1** bis **4** entsprechenden Darstellung und Ansicht eine weitere Ausführungsform einer erfindungsgemäßen Betätigungseinrichtung, mit polygonförmigem Nocken;
- **Fig. 6**: in einer **Fig. 5** entsprechenden Darstellung die Betätigungseinrichtung gemäß **Fig. 5****,** Wählhebel in Parksperrenstellung "P" mit einseitigem Bewegungsbereich in Richtung Fahrstufenstellung "D";
- **Fig. 7**: in einer **Fig. 5** und **6** entsprechenden Darstellung die Betätigungseinrichtung gemäß **Fig. 5** und **6****,** Wählhebel in Neutralstellung "N" mit beidseitigem Bewegungsbereich zwischen den Stellungen "P" und "D";
- **Fig. 8**: in einer **Fig. 5** bis **7** entsprechenden Darstellung die Betätigungseinrichtung gemäß **Fig. 5** bis **7****,** Wählhebel in Fahrstufenstellung "D" mit einseitigem Bewegungsbereich in Richtung Parksperrenstellung "P";
- **Fig. 9**: in einer **Fig. 5** bis **8** entsprechenden Darstellung die Betätigungseinrichtung gemäß **Fig. 5** bis **8****,** Wählhebel in Fahrstufenstellung "R" mit beidseitigem Bewegungsbereich zwischen den Stellungen "P" und "D";
- **Fig. 10**: in einer schematisierten seitlichen Darstellung Sperrnocken und Sperrausnehmung einer weiteren Ausführungsform einer erfindungsgemäßen Betätigungseinrichtung, Sperrnocken in Parksperrenstellung "P";
- **Fig. 11**: in einer **Fig. 10** entsprechenden Darstellung Sperrnocken und Sperrausnehmung gemäß **Fig. 10****,** Sperrnocken in Fahrstufenstellung "R";
- **Fig. 12**: in einer **Fig. 10** und **11** entsprechenden Darstellung Sperrnocken und Sperrausnehmung gemäß **Fig. 10** und **11****,** Sperrnocken in Sperrstellung des Wählhebels;
- **Fig. 13**: in einer **Fig. 10** bis **12** entsprechenden Darstellung Sperrnocken und Sperrausnehmung gemäß **Fig. 10** bis **12****,** Sperrnocken in Fahrstufenstellung "D"; und
- **Fig. 14**: in einer **Fig. 10** bis **13** entsprechenden Darstellung Sperrnocken und Sperrausnehmung gemäß **Fig. 10** bis **13****,** Sperrnocken in Neutralstellung "N".

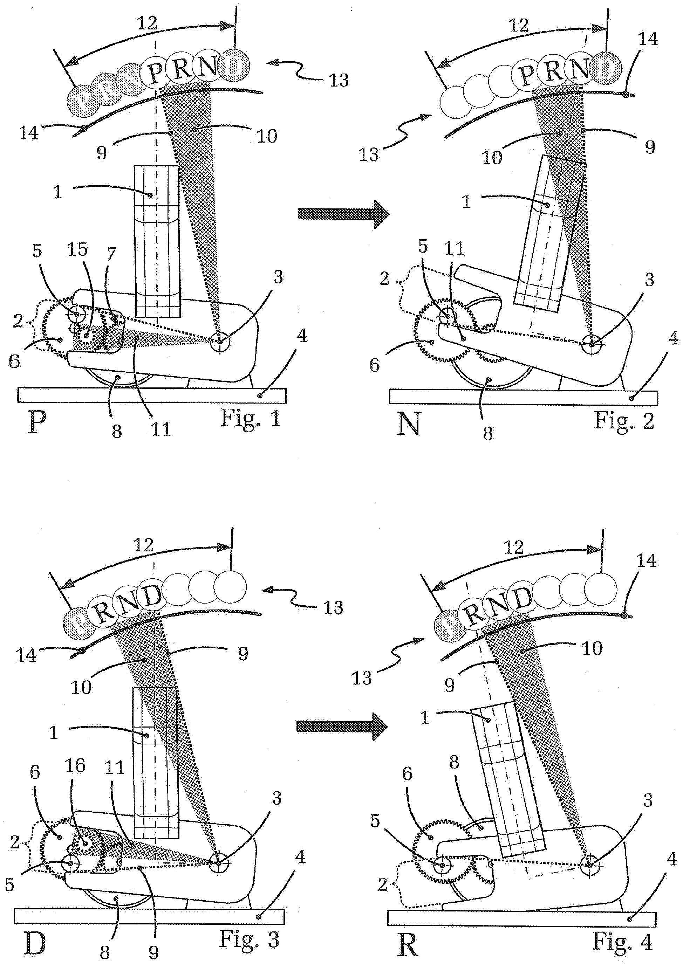

**Fig. 1** zeigt in schematisch ausgeführter Seitenansicht eine Ausführungsform einer Betätigungseinrichtung gemäß der vorliegenden Erfindung. Man erkennt zunächst einmal den lediglich teilweise dargestellten Wählhebel 1 und die mit dem Wählhebel 1 verbundene Sperrausnehmung 2. Wählhebel 1 und Sperrausnehmung 2 sind miteinander verbunden und über die Schwenklagerung 3 gegenüber dem Sockel 4 der Betätigungseinrichtung schwenkbar. Bei der dargestellten Ausführungsform handelt es sich um eine Betätigungseinrichtung mit einem monostabilen Wählhebel 1. Dies bedeutet, dass der Wählhebel 1 bei Auslenkung um seine in **Fig. 1** dargestellte neutrale Mittelstellung federbelastet stets wieder in diese Mittelstellung zurückkehrt.

Ferner erkennt man einen zylindrischen Sperrnocken 5, der auf einem gleichzeitig als Zahnrad ausgebildeten Nockenrad 6 angeordnet ist. Das Nockenrad 6 wird angetrieben über ein Ritzel 7 mittels eines elektromotorischen Aktuatorantriebs 8. Auf diese Weise kann der exzentrisch auf dem Nockenrad 6 sitzende Sperrnocken 5 relativ zur Sperrausnehmung 2 in unterschiedliche Stellungen verbracht werden. In **Fig. 1** befindet sich der Sperrnocken 5 an seiner höchsten Position. Diese Position des Sperrnockens 5 korrespondiert mit der im Fahrzeuggetriebe eingelegten Parksperre. Mit anderen Worten bedeutet dies, dass immer dann, wenn im Fahrzeuggetriebe die Parksperre eingelegt wurde, sei es manuell oder automatisch, der Sperrnocken 5 mittels des Aktuatorantriebs 8 in die in **Fig. 1** gezeigte höchste Stellung verfahren wird.

Aus der Sicht des Bedieners bzw. Fahrers bedeutet dies, dass sich der Wählhebel bei eingelegter Parksperre nicht weiter nach vorne bewegen lässt, was durch die fett punktierte Linie bei 9 symbolisiert sein soll. Hingegen lässt sich der Wählhebel 1 bei der dargestellten Ausführungsform aus der Parksperrenstellung um bis zu zwei Fahrstufenstellungen nach hinten (also zeichnungsbezogen nach rechts) bewegen, um so beispielsweise den Rückwärtsgang "R" oder die Neutralstellung "N" anzuwählen. Diese Bewegungsmöglichkeit des Wählhebels1 wird in **Fig. 1** durch den rautiert hervorgehobenen Bewegungswinkel 10 symbolisiert, der mit dem winkelmäßig ebenso großen Bewegungsfreiheitsgrad 11 des Sperrnockens 5 korrespondiert. Dies bedeutet mit anderen Worten, dass die Relativposition des Sperrnockens 5 innerhalb der Sperrausnehmung 2 in variabler Weise sowohl den momentanen Endanschlag 9 des Wählhebels 1 als auch den momentanen Bewegungsbereich 10 des Wählhebels 1 innerhalb des gesamten zur Verfügung stehenden Fensters 12 für die Bewegung des Wählhebels bestimmt.

Außer durch die aktive Positionierung des Endanschlags 9 sowie des Bewegungsbereichs 10 für den Wählhebel 1 wird dem Nutzer der aktuelle Schaltzustand des zu steuernden Gangwechselgetriebes durch entsprechende variable Leuchtanzeigen 13 signalisiert. Dabei ist die in den Leuchtanzeigen 13 jeweils signalisierte, aktuell eingelegte Fahrstufenposition (also Parksperre "P" in **Fig. 1** oder Drive-Fahrstufe "D" in **Fig. 3**) und es sind die jeweils anwählbaren, benachbarten Gangstufen nicht räumlich fest einer bestimmten Position relativ zur Schaltkulisse 14 zugeordnet, sondern es erfolgt vielmehr eine entsprechende variable Ansteuerung und Anzeige der momentanen eingelegten Fahrstufenposition und der benachbarten Gangstufen relativ zum stets in seiner Mittelstellung verharrenden Wählhebel 1. Mit anderen Worten bedeutet dies, dass - anders als beim herkömmlichen Wählhebel mit stabilen Wählhebelpositionen - nicht der bewegliche Wählhebel relativ zur feststehenden Skala den eingelegten Gang visualisiert, sondern dass diese Aufgabe vielmehr umgekehrt die variabel ansteuerbare, sprich virtuell bewegliche Skala 13 relativ zum feststehenden Wählhebel 1 übernimmt. In **Fig. 1** sei dies dadurch angedeutet, dass die punktiert hinterlegten, momentan inaktiven Bereiche der Ganganzeige 13 ebenfalls mit einer der möglichen Gangstufenanzeigen belegt sind.

**Fig. 2** stellt die Situation dar, die sich ergibt, wenn der Wählhebel 1 aus der Parksperrenstellung gemäß **Fig. 1** in die Neutralstellung bewegt wird. Wieder sorgt der Sperrnocken 5 im Zusammenwirken mit der Sperrausnehmung 2 für einen spürbaren Endanschlag 9, diesmal bei der Betätigung des Wählhebels 1. Nach dem Loslassen des Wählhebels 1 aus der Position gemäß **Fig. 2** kehrt der Wählhebel 1 wieder in die Mittelstellung gemäß **Fig. 1** zurück. Dabei wird jedoch durch die Steuerelektronik der Betätigungseinrichtung gleichzeitig die Ganganzeige 13 entsprechend nachgeführt, so dass nach der Rückkehr des Wählhebels in seine Mittelstellung gemäß **Fig. 1** nach wie vor korrekt die nunmehr eingelegte Fahrstufe "N" angezeigt wird.

Gleichzeitig erfolgt durch die Aktuatoreinrichtung 8 eine entsprechende Nachführung auch des Sperrnockens 5 in die mit der Wählhebelstellung "N" korrespondierende Relativposition. Letzteres ist angedeutet durch die punktiert dargestellte Position 15 des Sperrnockens 5 in **Fig. 1****,** die somit - übereinstimmend mit der nunmehr eingelegten Gangstufe "N" - eine Relativbewegung des Wählhebels um eine Stufe zeichnungsbezogen nach rechts bzw. um zwei Stufen zeichnungsbezogen nach links erlaubt.

Eine den **Fig. 1** und **2** analoge Situation ergibt sich in der Darstellung gemäß **Fig. 3** und **4****;** mit dem Unterschied, dass in den **Fig. 3** und **4** nicht wie zuvor aus "P" nach "N", sondern aus Fahrstufe "D" in den Rückwärtsgang "R" geschaltet wird. Wieder bestimmt anfangs - gemäß **Fig. 3** **-** die Relativposition des Sperrnockens 5 innerhalb der Sperrausnehmung 2 den gemäß der momentanen eingelegten Fahrstufe "D" zur Verfügung stehenden Bewegungsbereich 10 des Wählhebels 1 in Richtung Fahrstufe "R" (übereinstimmend mit dem Bewegungsbereich 11 der Sperrausnehmung 2 relativ zum Sperrnocken 5), wie auch den momentan gültigen Endanschlag 9 des Wählhebels 1 in der Gegenrichtung nach "D", da die fahrtrichtungsbezogen hinterste (zeichnungsbezogen am weitesten rechts liegende) Gangstufe "D" bereits eingelegt ist.

Wird der Wählhebel 1 gemäß der Darstellung in **Fig. 4** aus Fahrstufe "D" nach "R" bewegt, so löst dies zunächst einmal wieder den entsprechenden Schaltbefehl im Gangwechselgetriebe aus. Beim anschließenden Loslassen des Wählhebels springt dieser wieder in seine Mittelstellung gemäß **Fig. 3** zurück, wobei durch die Steuerelektronik der Betätigungseinrichtung wieder eine der Rückbewegung des Wählhebels 1 entsprechende Nachführung der Ganganzeige 13 erfolgt, wie auch gleichzeitig die Rotationsstellung des Sperrnockens 5 entsprechend angepasst wird, so dass der Sperrnocken 5 anschließend die in **Fig. 3** wieder punktiert angedeutete Position 16 einnimmt.

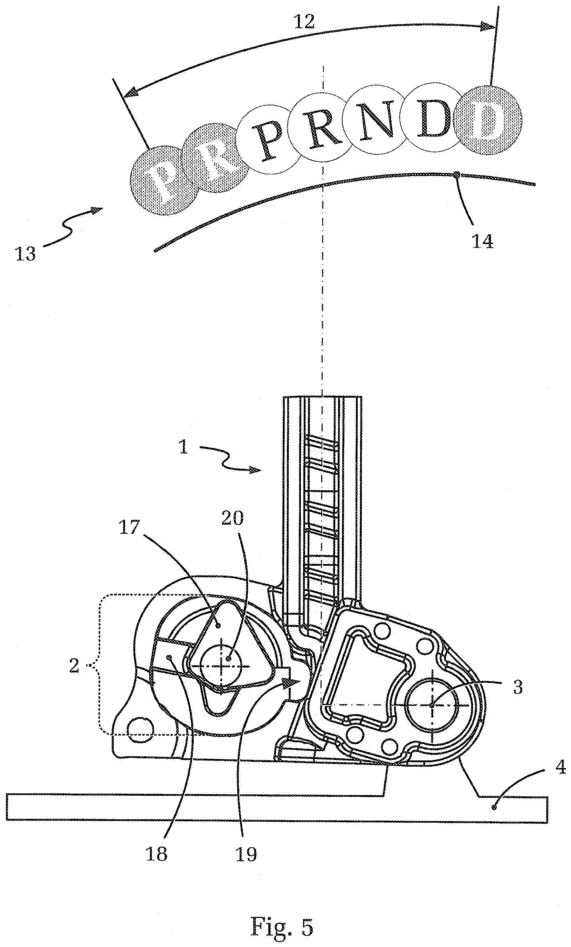

**Fig. 5** zeigt eine weitere Ausführungsform einer erfindungsgemäßen Betätigungseinrichtung. Die in **Fig. 5** dargestellte Betätigungseinrichtung unterscheidet sich von der Betätigungseinrichtung gemäß **Fig. 1** bis **4** insbesondere dadurch, dass die Betätigungseinrichtung gemäß **Fig. 5** einen unregelmäßig geformten, exzentrisch rotierbaren polygonalen Sperrnocken 17 aufweist. Man erkennt in **Fig. 5** außerdem wieder eine Schwenklagerung 3, um die der Wählhebel 1 zusammen mit der mit dem Wählhebel 1 verbundenen Sperrausnehmung 2 relativ zu einem Sockel 4, sowie relativ zum Sperrnocken 17 verschwenkt werden kann. Die Betätigungseinrichtung gemäß **Fig. 5** umfasst ferner wieder eine Ganganzeige 13 mit variabel innerhalb des Gesamtbewegungsfensters 12 des Wählhebels 1 positionierbaren bzw. ansteuerbaren Leuchtanzeigen für die einzelnen Fahrstufen "P", "R", "N" und "D".

Eine Besonderheit der in **Fig. 5** dargestellten Betätigungseinrichtung liegt ferner darin, dass bei dieser Ausführungsform mehrere in Axialrichtung (also senkrecht zur Papierebene) hintereinander angeordnete Nocken bzw. Nockenscheiben vorhanden sind. Außer dem Sperrnocken 17 ist insbesondere noch eine weitere, zeichnungsbezogen hinter dem Sperrnocken 17 angeordnete Nockenscheibe vorhanden. Die weitere Nockenscheibe weist dabei insbesondere einen Sperrvorsprung 18 auf, wobei der Sperrvorsprung 18 zusammen mit der Ausnehmung 19 eine zusätzliche Sperreinrichtung für den Wählhebel bildet. Dabei ist die Ausnehmung 19 außerhalb der zeichnungsbezogen oben und unten in der Sperraussparung 2 angeordneten Kontaktflächen bzw. Anschlagbereiche für den Sperrnocken 17 angeordnet, so dass innerhalb der Sperraussparung 2 keine Interferenz zwischen den unterschiedlichen Sperrfunktionen des Sperrnockens 17 und der Nockenscheibe 18 entstehen kann.

Auf diese Weise lässt sich über ein und dieselbe Sperrvorrichtung, bzw. mit lediglich einem elektromotorischen Aktuator, zusätzlich zu der Beeinflussung des Bewegungsbereichs des Wählhebels 1 ferner auch eine Sperrung bzw. Freigabe insbesondere einer etwa vorhandenen (fahrzeugbezogen) seitlichen Bewegbarkeit des Wählhebels realisieren. Diese zusätzliche Sperrfunktion kann somit insbesondere zur Sperrung bzw. Freigabe des seitlichen Wechsels des Wählhebels zwischen verschiedenen Wählhebelgassen - beispielsweise zwischen Schaltgasse und Tipgasse - herangezogen werden.

Um für den Wählhebel 1 somit beispielsweise den Wechsel aus einer Schaltgasse in eine Tipgasse freizugeben, muss lediglich die Nockenwelle 20, auf der die weitere Nockenscheibe mit dem Sperrvorsprung 18 sowie der Sperrnocken 17 gemeinsam angeordnet sind, in diejenige Position gedreht werden, in welcher der Sperrvorsprung 18 zur Deckung mit der Ausnehmung 19 in der Sperraussparung 2 kommt. Anschließend kann der Wählhebel 1 (zusammen mit der Sperraussparung 2) seitwärts aus der Schaltgasse heraus in die Tipgasse bewegt werden. Dabei kann der Sperrvorsprung 18 der zweiten Nockenscheibe seitwärts durch die Ausnehmung 19 in der Sperraussparung 2 passieren. In allen anderen Rotationswinkelstellungen des Sperrnockens 17 bzw. der Nockenwelle 20 hingegen ist die Seitwärtsbewegung des Wählhebels aus der Schaltgasse in die Tipgasse mittels des Sperrvorsprungs 18 der zweiten Nockenscheibe gesperrt, da der Sperrvorsprung 18 in diesen Fällen zeichnungsbezogen von hinten an die Sperraussparung 2 anschlägt und somit die Bewegung der Sperraussparung 2 in die Zeichenebene hinein (bzw. fahrzeugbezogen in Querrichtung) blockiert.

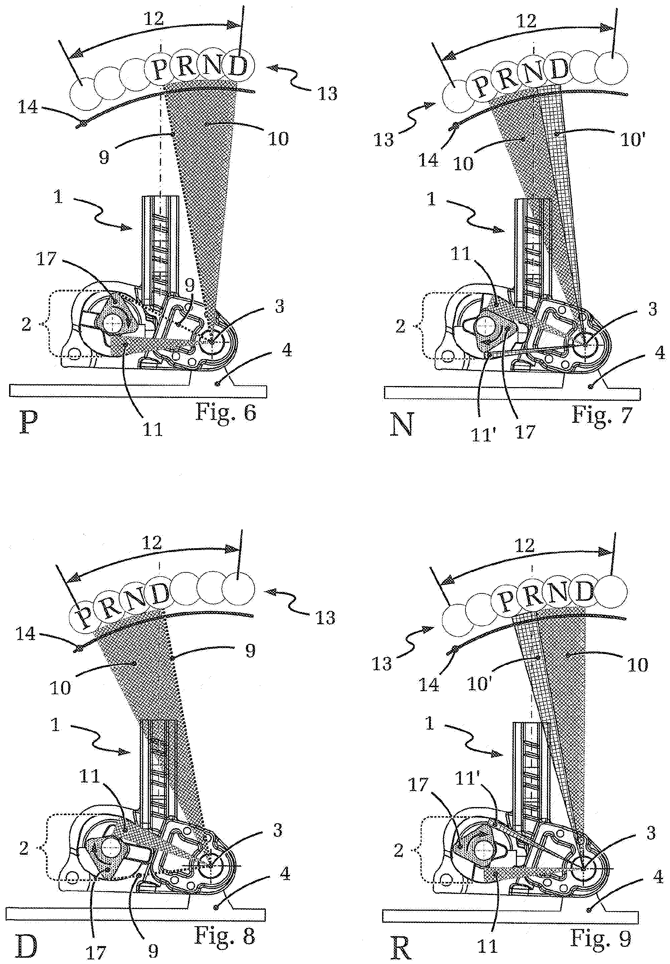

Die dem Ausführungsbeispiel gemäß **Fig. 5** entsprechende **Fig. 6** zeigt zunächst einmal die Relativposition von Sperrnocken 17 und Sperrausnehmung 2, sowie den mit der Sperrausnehmung 2 verbundenen Wählhebel 1 für den Fall der eingelegten Parksperre "P". Die Leuchtelemente "PRND" der Ganganzeige 13 werden in diesem Fall von der Steuerelektronik der Betätigungseinrichtung - relativ zu dem stets in seiner Mittelstellung verharrenden Wählhebel 1 - variabel so innerhalb des gesamten für den Wählhebel 1 zur Verfügung stehenden Bewegungsfensters 12 aktiviert bzw. positioniert, dass die Position der Leuchtelemente "PRND" relativ zum stillstehenden Wählhebel mit der im Getriebe tatsächlich eingelegten Parksperre "P" übereinstimmt.

Außerdem wird auch die aus Sperrnocken 17 und Sperrausnehmung 2 bestehende variable Anschlageinrichtung des Wählhebels 1 mittels entsprechender Rotation des Sperrnockens 17 so angesteuert, dass der am Wählhebel 1 tatsächlich zur Verfügung stehende Schaltweg 10 ebenfalls logisch mit der momentanen eingelegten Parksperre "P" übereinstimmt. Mit anderen Worten bedeutet dies, dass der Wählhebel 1 - obwohl monostabil ausgebildet und daher stets in seiner Mittelstellung verharrend - ebenso wie ein konventioneller, multistabiler Wählhebel, der sich in der Parksperrenstellung befindet, vom Bediener nicht weiter nach vorne geschoben werden kann, wobei jedoch gleichzeitig bis zu drei Schaltstufen nach hinten geschaltet werden kann, sprich, der Wählhebel 1 kann bis zur Fahrstufe "D" nach hinten (bzw. zeichnungsbezogen nach rechts), nicht jedoch nach vorne (bzw. zeichnungsbezogen nach links) bewegt werden.

Dies ist bei der dargestellten Betätigungseinrichtung unabhängig davon der Fall, ob beispielsweise die Parksperre manuell oder aber automatisch eingelegt wurde. Denn auch für den Fall des automatischen Einlegens der Parksperre aus einer der Fahrstufen oder aus der Neutralstellung "N" heraus kann die Steuerelektronik der Betätigungseinrichtung sowohl die Leuchtelemente "PRND" der Ganganzeige 13 als auch den Sperrnocken 17 automatisch nachführen dergestalt, dass am Wählhebel 1 die zur Parksperrenstellung gehörige, entsprechende Optik (Ganganzeige 13 zeigt Getriebestufe "P") und Haptik (Bewegungsbereich 10 und Endanschlag 9 entsprechend Getriebestufe "P") hergestellt werden. Trotz der beispielsweise beim Verlassen des Fahrzeugs etwa automatisch eingelegten Parksperre findet somit der Fahrer bei Rückkehr zum Kraftfahrzeug und beim erneuten Losfahren die Relativposition zwischen Ganganzeige 13 und Wählhebel 1 wie auch die Endanschläge des Wählhebels in Übereinstimmung mit der eingelegten Position "Parksperre" vor.

Der dem Wählhebel 1 zur Verfügung stehende Bewegungsbereich 10 wird dabei hier durch den zwischen Sperrnocken 17 und der unteren Kante der Sperrausnehmung 2 gebildeten Freiraum 11 bestimmt, welcher der leichteren Erkennbarkeit halber in **Fig. 6** **-** ebenso wie der Bewegungsbereich 10 selbst - zeichnerisch wieder mit entsprechender Rautierung versehen ist. Der momentane Endanschlag 9 des Wählhebels 1 in der dem Bewegungsbereich entgegengesetzten Richtung (also zeichnungsbezogen nach links, bzw. am Kraftfahrzeug nach vorne) hingegen wird gebildet durch den in diesem Fall an der oberen Kante der Sperrausnehmung 2 anliegenden Sperrnocken 17.

Analog zu der für die Parksperrenstellung "P" dargestellten Situation verhält es sich in den anderen drei Fahrstufenpositionen "N", "D" und "R" des Wählhebels 1. Die jeweils zugehörigen Positionen des Sperrnockens 17 und der Leuchtelemente "PRND" der Ganganzeige 13 sind in den **Fig. 7, 8** bzw. **9** dargestellt.

In **Fig. 7** sei im Getriebe die Fahrstufe "N" eingelegt. Infolgedessen wurden durch die Steuerelektronik der Betätigungseinrichtung einerseits die Leuchtelemente "PRND" der Ganganzeige 13 relativ zum Wählhebel 1, bzw. zur Schaltkulisse 14 in die mit der Fahrstufe "N" übereinstimmende Relativposition zum Wählhebel 1 bzw. zur Schaltkulisse 14 verbracht, und andererseits wird der Sperrnocken 17 so weit rotiert, dass sich zwischen Sperrnocken 17 und Sperrausnehmung 2 entsprechende Abstände bzw. Bewegungswinkel 11 (in der Zeichnung rautiert hinterlegt) und 11' (in der Zeichnung kariert hinterlegt) ergeben. Die Bewegungswinkel 11 und 11' übertragen sich aufgrund der hier einstückigen Verbindung zwischen der Sperrausnehmung 2 und dem Wählhebel 1 proportional auf den Wählhebel 1, und bilden somit die in der momentan eingelegten Fahrstufenposition "N" zur Verfügung stehenden Bewegungsmöglichkeiten 10 (wieder rautiert hinterlegt) und 10' (wieder kariert hinterlegt) des Wählhebels 1.

Ganz ähnlich wie in **Fig. 7** bezüglich der Fahrstufenstellung "N" dargestellt, verhält es sich bei der in **Fig. 9** abgebildeten Situation bezüglich der Fahrstufenstellung "R". Zwischen den Situationen in **Fig. 9** bzw. in **Fig. 7** besteht im Wesentlichen lediglich der Unterschied, dass der Sperrnocken 17 um 180° rotiert wurde, so dass im Unterschied zu **Fig. 7** die Bewegungswinkel 11 und 11' der Sperrausnehmung 2 bzw. der Bewegungswinkel 10 und 10' des Wählhebels 1 umgekehrte Größenverhältnisse aufweisen. Ferner wurde die Position der Leuchtelemente "PRND" der Ganganzeige 13 der tatsächlich eingelegten Fahrstufenstellung "R" angepasst und durch entsprechende Ansteuerung der korrespondierenden Leuchtelemente innerhalb des Gesamtbewegungsfensters 12 verschoben.

Die in Fig. 8 dargestellte Situation bezüglich der Fahrstufenposition "D" entspricht im Wesentlichen der in **Fig. 6** dargestellten Situation bei eingelegter Parksperre, mit dem Unterschied, dass in **Fig. 8** der Sperrnocken 17 gegenüber der Parksperrenstellung in **Fig. 6** wieder um 180° rotiert wurde, und dass außerdem die Position der Leuchtelemente "PRND" der Ganganzeige 13 wieder entsprechend innerhalb des Bewegungsfensters 12 angepasst wurde. Durch die entsprechend veränderte Rotationsstellung des Sperrnockens 17 in der Sperrausnehmung 2 ergibt sich der mit der Fahrstufenposition "D" übereinstimmende Bewegungswinkel 10 bzw. 11 von drei Stufen nach vorne bzw. zeichnungsbezogen nach links für den Wählhebel 1, wie auch gleichzeitig die durch die punktierte Linie 9 angedeutete Blockierung des Wählhebels 1 nach hinten bzw. zeichnungsbezogen nach rechts.

Somit stimmen auch bei **Fig. 8** bzw. in der Fahrstufenposition "D" sowohl die Relativposition der Ganganzeige "PRND" relativ zum Wählhebel 1 wie auch die tatsächlichen Bewegungsmöglichkeiten des monostabilen Wählhebels 1 mit den Gegebenheiten überein, wie sie sich bei einem konventionellen multistabilen Wählhebel mit stabilen Wählhebelpositionen darbieten würden.

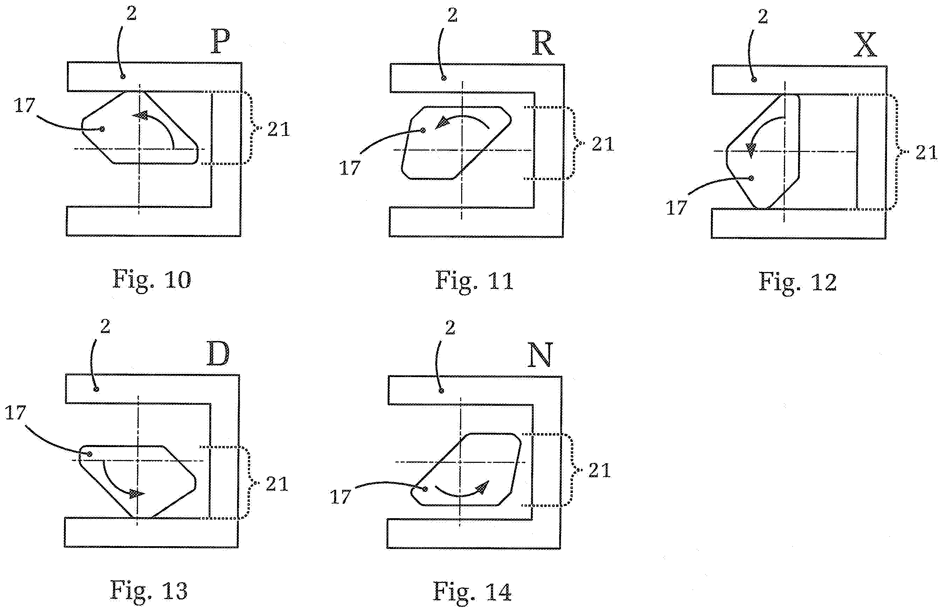

In den **Fig. 10** bis **14** schließlich ist in höchst schematisierter Weise die Sperrvorrichtung einer weiteren Ausführungsform für eine erfindungsgemäße Betätigungseinrichtung dargestellt. Man erkennt jeweils den auch hier wieder unregelmäßig polygonal ausgebildeten Sperrnocken 17, der in seinen unterschiedlichen Rotationsstellungen gemäß den **Fig. 10** bis **14** jeweils unterschiedliche Paare von Bewegungswinkeln 10 und 10' bzw. 11 und 11' (vgl. **Fig. 7** bzw. **9**) für die Sperrausnehmung 2 und damit auch für den mit der Sperrausnehmung 2 verbundenen (hier nicht dargestellten) Wählhebel 1 zur Verfügung stellt.

Die Besonderheit bei der Ausführungsform gemäß **Fig. 10** bis **14** liegt insbesondere darin, dass der Sperrnocken 17 hier nicht nur vier, sondern fünf unterschiedliche Rotationsstellungen einnehmen kann, in denen der Sperrnocken 17 jeweils unterschiedliche wirksame Durchmesser 21 bzw. eine unterschiedliche Relativposition seines jeweils wirksamen Durchmessers 21 innerhalb der Sperrausnehmung 2 bereitstellt.

Hervorzuheben ist hierbei insbesondere **Fig. 12****,** in welcher die fünfte, zusätzliche Rotationswinkelstellung "X" des Sperrnockens 17 gezeigt ist. In dieser fünften Rotationswinkelstellung gemäß **Fig. 12** exponiert der Sperrnocken 17 gegenüber der Sperrausnehmung 2 einen wirksamen Durchmesser D, der mit der lichten Weite der Sperrausnehmung 2 übereinstimmt.

Dies bedeutet mit anderen Worten, dass die Sperrvorrichtung gemäß **Fig. 10** bis **14** nicht nur vier unterschiedliche Paare von Bewegungswinkeln 10 und 10' bzw. 11 und 11' (vgl. **Fig. 7** bzw. **9**) zum Zweck der haptisch korrekten Ansteuerung des Wählhebels 1 zur Verfügung stellt, sondern dass zusätzlich eine fünfte Rotationswinkelstellung des Sperrnockens 17 gemäß **Fig. 12** dazu genutzt werden kann, den Wählhebel in einer bestimmten Position komplett zu sperren, beispielsweise um dem Fahrer damit haptisch zu signalisieren, dass das Fahrzeug oder das Getriebe nicht betriebsbereit ist, oder dass noch eine Sicherheitssperre eingelegt ist.

Im Ergebnis wird damit deutlich, dass mit der Erfindung eine Betätigungseinrichtung mit einer Sperrvorrichtung geschaffen wird, die gegenüber dem Stand der Technik insbesondere den Vorteil aufweist, dass sie auch im Fall komplexer Sperraufgaben mit der minimal möglichen Anzahl an Aktuatoren auskommt. Zusätzliche Vorteile werden in Form der konstruktiv besonders einfachen und damit kostensparenden Ausgestaltung und der energiesparenden Betriebsmöglichkeit erreicht. Ferner lässt sich die Sperrvorrichtung der erfindungsgemäßen Betätigungseinrichtung auch zur frei variablen Positionierung bzw. Veränderung des Bewegungsbereichs eines Wählhebels, wie auch ggf. zusätzlich zur aktuatorischen Bewegung des Wählhebels heranziehen.

Auf diese Weise ermöglicht die Erfindung auch und gerade bei den aktuellen monostabilen Betätigungseinrichtungen eine für den Fahrer stets zuverlässige taktile Rückmeldung über den tatsächlichen Schaltzustand und die aktuellen Betätigungsmöglichkeiten beispielsweise eines Automatikgetriebes.

Dank der kostensparenden Realisierbarkeit und der hohen Zuverlässigkeit im Betrieb leistet die Erfindung einen entscheidenden Beitrag zur Verbesserung von Komfort, Ergonomie und Sicherheit bei Betätigungseinrichtungen für Kraftfahrzeuggetriebe, insbesondere bei anspruchsvollen Anwendungen im Bereich der Getriebeautomaten.

### Bezugszeichenliste

- 1: Wählhebel
- 2: Sperrausnehmung
- 3: Schwenkachse
- 4: Sockel
- 5: Sperrnocken
- 6: Nockenrad
- 7: Abtriebsritzel
- 8: Servomotor
- 9: Endanschlag
- 10, 10': Winkelbereich
- 11, 11': Winkelbereich
- 12: Gesamtbewegungswinkel
- 13: Fahrstufenanzeige
- 14: Schaltkulisse
- 15, 16: Sperrnockenposition
- 17: Sperrnocken
- 18: Sperrvorsprung
- 19: Ausnehmung
- 2 0: Nockenwelle
- 21: wirksamer Nockendurchmesser

## Patentansprüche

1. Betätigungseinrichtung zur Auswahl von Schaltstufen eines Gangwechselgetriebes, die Betätigungseinrichtung umfassend einen zwischen zumindest zwei Fahrstufenstellungen bewegbaren Wählhebel (1) sowie eine Sperrvorrichtung zur Einschränkung des Bewegungsbereichs des Wählhebels (1), zur Blockierung bestimmter Fahrstufenpositionen bzw. zur Blockierung des Wählhebels (1), wobei die Sperrvorrichtung eine mit dem Wählhebel (1) verbundene Sperraussparung (2) sowie einen aktuatorisch um eine zu seiner Längsachse parallele Drehachse rotierbaren, im Wesentlichen prismatischen Sperrnocken (5, 17) umfasst, wobei der Nocken (5, 17) in die Sperraussparung (2) eingreift, **dadurch gekennzeichnet, dass** der Nocken (5, 17) stirnseitig auf einem Nockenrad (6) angeordnet ist.

2. Betätigungseinrichtung nach Anspruch 1,
**dadurch gekennzeichnet,**
**dass** der Wählhebel (1) monostabil ausgebildet ist.

3. Betätigungseinrichtung nach Anspruch 1,
**dadurch gekennzeichnet,**
**dass** das Nockenrad (6) durch ein Zahnrad gebildet ist.

4. Betätigungseinrichtung nach einem der Ansprüche 1 bis 3,
**dadurch gekennzeichnet,**
**dass** die Sperraussparung (2) in einem mit dem Wählhebel (1) winklig verbundenen Ausleger angeordnet ist.

5. Betätigungseinrichtung nach einem der Ansprüche 1 bis 4,
**dadurch gekennzeichnet,**
**dass** der Nocken (17) eine im Wesentlichen polygonale Querschnittsform aufweist.

6. Betätigungseinrichtung nach Anspruch 5,
**dadurch gekennzeichnet,**
**dass** der Nocken (17) eine im Wesentlichen unregelmäßig oktogonale Querschnittsform aufweist.

7. Betätigungseinrichtung nach einem der Ansprüche 5 oder 6,
**dadurch gekennzeichnet,**
**dass** einer der wirksamen Durchmesser (21) des Nockens (17) mit der zugehörigen wirksamen Weite der Sperraussparung (2) übereinstimmt.

8. Betätigungseinrichtung nach einem der Ansprüche 1 bis 7,
**dadurch gekennzeichnet,**
**dass** die Sperreinrichtung mehrere als Nockenscheiben ausgebildete, achsparallel angeordnete und in Axialrichtung aneinander angrenzende Nocken (17) aufweist.

9. Betätigungseinrichtung nach Anspruch 8,
**dadurch gekennzeichnet,**
**dass** eine zweite Nockenscheibe einen Sperrvorsprung (18) aufweist, der formkomplementär zu einer in der Sperraussparung (2) außerhalb der Anschlagbereiche für eine erste Nockenscheibe angeordneten Ausnehmung (19) ausgebildet ist.

## Claims

1. Actuating device for selecting shift stages of a gear-change transmission, the actuating device comprising a selector lever (1) which is movable between at least two drive stage positions, and a locking mechanism for restricting the range of movement of the selector lever (1), for blocking certain drive stage positions or for blocking the selector lever (1), wherein the locking mechanism comprises a locking cutout (2) which is connected to the selector lever (1), and a substantially prismatic locking cam (5, 17) which is rotatable by actuator means about an axis of rotation parallel to the longitudinal axis of said locking cutout, wherein the cam (5, 17) engages in the locking cutout (2), **characterized in that** the face of the cam (5, 17) is arranged on a cam wheel (6).

2. Actuating device according to Claim 1, **characterized in that** the selector lever (1) is of monostable design.

3. Actuating device according to Claim 1, **characterized in that** the cam wheel (6) is formed by a gearwheel.

4. Actuating device according to one of Claims 1 to 3, **characterized in that** the locking cutout (2) is arranged in an extension arm connected in an angular manner to the selector lever (1).

5. Actuating device according to one of Claims 1 to 4, **characterized in that** the cam (17) has a substantially polygonal cross-sectional form.

6. Actuating device according to Claim 5, **characterized in that** the cam (17) has a substantially irregularly octagonal cross-sectional form.

7. Actuating device according to one of Claims 5 to 6, **characterized in that** one of the effective diameters (21) of the cam (17) coincides with the associated effective width of the locking cutout (2).

8. Actuating device according to one of Claims 1 to 7, **characterized in that** the locking mechanism has a plurality of cams (17) which are designed as cam disks, are arranged axially parallel and are adjacent to one another in the axial direction.

9. Actuating device according to Claim 8, **characterized in that** a second cam disk has a locking projection (18) which is designed to be complementary in shape to a recess (19) arranged in the locking cutout (2) outside the stop regions for a first cam disk.

## Revendications

1. Dispositif de commande pour la sélection de crans de changement de vitesse de boîte de vitesses, le dispositif de commande comprenant un levier de vitesses (1) mobile entre au moins deux positions de cran de marche ainsi qu'un dispositif de blocage servant à limiter la plage de déplacement du levier de vitesses (1), afin de bloquer des positions de cran de marche définies et/ou de bloquer le levier de vitesses (1), le dispositif de blocage comprenant un évidement de blocage (2) relié au levier de vitesses (1) ainsi qu'une came de blocage (5, 17) pour l'essentiel prismatique pouvant tourner, par le biais d'un actionneur, autour de son axe de rotation parallèle à son axe longitudinal, la came (5, 17) s'engrenant dans l'évidement de blocage (2) ;
**caractérisé en ce que** :
la came (5, 17) est disposée, sur le côté avant, sur une roue à came (6) .

2. Dispositif de commande selon la revendication 1,
**caractérisé en ce que** le levier de vitesses (1) est réalisé de façon monostable.

3. Dispositif de commande selon la revendication 1,
**caractérisé en ce que** la roue à came (6) est formée par une roue dentée.

4. Dispositif de commande selon l'une quelconque des revendications 1 à 3, **caractérisé en ce que** l'évidement de blocage (2) est disposé dans une flèche reliée en angle au levier de vitesses (1).

5. Dispositif de commande selon l'une quelconque des revendications 1 à 4, **caractérisé en ce que** la came (17) présente une forme de section transversale pour l'essentiel polygonale.

6. Dispositif de commande selon la revendication 5,
**caractérisé en ce que** la came (17) présente une forme de section transversale pour l'essentiel irrégulièrement octogonale.

7. Dispositif de commande selon l'une quelconque des revendications 5 à 6, **caractérisé en ce qu'**un des diamètres (21) actifs de la came (17) correspond à l'écartement actif associé de l'évidement de blocage (2) .

8. Dispositif de commande selon l'une quelconque des revendications 1 à 7, **caractérisé en ce que** le dispositif de blocage comporte plusieurs cames (17) réalisées sous la forme de disques de came, disposées parallèlement à l'axe et connexes les unes par rapport aux autres dans la direction axiale.

9. Dispositif de commande selon la revendication 8,
**caractérisé en ce qu'**un deuxième disque de came comporte une saillie de blocage (18) réalisée avec une complémentarité de formes par rapport à un évidement (19) disposé dans l'évidement de blocage (2), à l'extérieur des régions de butée, pour un premier disque de came.
